# EUROPEAN PATENT APPLICATION

(11) **EP 4 575 963 A1**
(43) Date of publication of application: **25.06.2025**
(21) Application number: 24217482.9
(22) Date of filing: 04.12.2024
(51) Int. Cl.: G06Q 30/0207, G06Q 30/0238

(54) **METHOD AND SYSTEM FOR DYNAMIC PROMOTIONAL OFFER RECOMMENDATION**

(30) Priority: 19.12.2023 IN 202321087017
(71) Applicant: Tata Consultancy Services Limited, Maharashtra (IN)
(72) Inventor: THIRUNAVUKKARASU, JEISOBERS, 600097 Chennai, Tamil Nadu (IN); CHANDRAN, PRASANNA, 600097 Chennai, Tamil Nadu (IN); THANGAVEL, VAIRA MUTHU, 600097 Chennai, Tamil Nadu (IN); ULAGANATHAN, SELVA GANAPATHY, 600097 Chennai, Tamil Nadu (IN); CHAUDHURY, ABHISHEK NARAYAN, 600097 Chennai, Tamil Nadu (IN); SETH, AMIT KUMAR, 411057 Pune, Maharashtra (IN)
(74) Representative: Goddar, Heinz J.

(57) **Abstract**

This disclosure relates generally to a method and system for assigning an ideal promotional offer on the plurality of items in a cart in real-time. Retailers have huge number of promotional offers and complex eligibility rules leading to explored number of combination of offers eligible to cart items in real time. It becomes challenging to identify the ideal offers that need to be assigned to cart items in real time. In addition, retailers introduce new promotional offers at frequent intervals and leading to adjust analytical framework every time as per the new promotional offer added. The disclosed method provides a mechanism wherein existing promotional offers are mapped with the cart items that maximize benefit to the shopper and also handles new promotional offers by assigning a suitable objective function automatically. Therefore, ideal combination of offers is provided to the shopper seamlessly.

## Description

### CROSS-REFERENCE TO RELATED APPLICATIONS AND PRIORITY

The present application claims priority from Indian patent application no. 202321087017, filed on December 19, 2023

### TECHNICAL FIELD

The disclosure herein generally relates to a field of intelligent automation in retail marketing, and, more particularly, to the dynamic assignment of the ideal promotional offer for simultaneously, maximizing customer benefit and endorsing sales.

### BACKGROUND

In a retail scenario, retailers commonly employ promotions to improve sales volume, revenues, profits, and shopper satisfaction. Based on the strategy followed by retailers, they implement many promotional offers for a specific period of time, and they keep introducing new offers at frequent intervals. Nature of the promotional offers for each item varies depending on business rules followed by the retailer's strategy and the time frame. In an instance, one item may have a single promotional offer or many promotional offers depending on the business rule followed by the retailer strategy wherein retailer figure out the nature of item(s) when particular item is kept single and when the particular item is combined with other items. This leads to many permutation and combination of the promotional offers that the retailer can play around and group the items in such a way that can result in better price saving for the customer and at the same time, it can push the sales by maximizing the sale volume. Consider a scenario wherein a shopper has a plurality of items in the cart. Some of the items may have a promotional offer attached to them. Some of the items in the cart when grouped with another item may become eligible for another promotional offer. This is a complex scenario when the cart items have different offers or fixed number of items in the cart bought may have many combined offers and may have different level of benefits for the shopper. This becomes challenging to identify the best combination of offers in real-time among all the promotional offers available at the time of check-out at point of sale (POS). Further, this complexity piles-up upon introduction of new offers. The retailer keeps introducing new promotional offers based on the numerous factors such as inventory, competition, shelf-life, occasion, weather conditions etc. Nevertheless, business rules are dynamic, and retailer has to release new offers based on business recommendations.

### SUMMARY

Embodiments of the present disclosure present technological improvements as solutions to one or more of the above-mentioned technical problems recognized by the inventors in conventional systems. For example, in one embodiment, a method for dynamic promotional offers recommendation by assigning an ideal promotional offer in real-time is provided. The method includes receiving, via one or more hardware processors, a plurality of existing promotional offers from a promotion repository of a retailer wherein the plurality of existing promotional offers is applicable for a particular time frame. The promotional repository comprises of existing promotional offers as well as new promotional offers. The system receives existing promotional offers from the repository for a specific period. The method further includes scanning, via the one or more hardware processors, a plurality of items in the cart at a point-of-sale (POS) counter. The POS receives a plurality of cart items as well as list of existing promotional offers. The method further includes, passing, via the one or more hardware processors, the plurality of scanned items and the existing promotional offers to a linear programming (LP) algorithm to assign the ideal promotional offer to the plurality of the scanned items. The LP algorithm optimizes the ideal promotional offer based on a plurality of objective functions. The LP algorithm also considers existing business rules, decision variables and constraints applicable at the time of scanning of the cart items at the POS. The method further includes deriving, via the one or more hardware processors, a centroid and standard deviation (SD) from an objective function specific promotional offer distribution (POD) wherein the POD is derived from a plurality of existing promotional offers pertaining to the objective function of the linear programming algorithm. The centroid of the existing promotional offers is derived from a distance measure between each pair of the existing promotional offers. The POD is specific to each objective function and has a dynamic distribution due to changing centroid and standard deviation during addition of the new promotional offer. The method further includes deriving, via the one or more hardware processors, an objective function specific dynamic threshold from the centroid and SD of the objective function specific POD to obtain the objective function. The method further includes assigning, via the one or more hardware processors, a new promotional offer by an automatic route when the new promotional offer lies within the objective function specific dynamic threshold; and a manual route when the new promotional offer lies outside an objective function specific dynamic threshold. The method further includes updating continuously, via the one or more hardware, the linear programming by accommodating the new promotional offers in real time.

In another aspect, a system for dynamic promotional offers recommendation by assigning an ideal promotional offer in real-time is provided. The system includes at least one memory storing programmed instructions; one or more Input /Output (I/O) interfaces; and one or more hardware processors, a promotional offer recommendation module, operatively coupled to a corresponding at least one memory, wherein the system is configured to receive, a plurality of existing promotional offers from a promotion repository of a retailer wherein the plurality of existing promotional offers is applicable for a particular time frame. The promotional repository comprises of existing promotional offers as well as new promotional offers. The system receives existing promotional offers from the repository for a specific period. Further, the system is configured to scan a plurality of items in the cart at a point-of-sale (POS) counter. The POS receives a plurality of cart items as well as list of existing promotional offers. Further, the system is configured to pass the plurality of scanned items and the existing promotional offers to a linear programming (LP) algorithm to assign the ideal promotional offer to the plurality of the scanned items. The LP algorithm optimizes the ideal promotional offer based on a plurality of objective functions. The LP algorithm also considers existing business rules, decision variables and constraints applicable at the time of scanning of the cart items at the POS. Further, the system is configured to derive a centroid and standard deviation (SD) from an objective function specific promotional offer distribution (POD) wherein the POD is derived from a plurality of existing promotional offers pertaining to the objective function of the linear programming algorithm. The centroid of the existing promotional offers is derived from a distance measure between each pair of the existing promotional offers. The POD is specific to each objective function and has a dynamic distribution due to changing centroid and standard deviation during addition of the new promotional offer. Further, the system is configured to derive an objective function specific dynamic threshold from the centroid and SD of the objective function specific POD to obtain the objective function. Further, the system is configured to assign a new promotional offer by an automatic route when the new promotional offer lies within the objective function specific dynamic threshold; and a manual route when the new promotional offer lies outside an objective function specific dynamic threshold. Further, the system is configured to update continuously the linear programming by accommodating the new promotional offers in real time.

In yet another aspect, a computer program product including a non-transitory computer-readable medium having embodied therein a computer program for dynamic promotional offers recommendation by assigning an ideal promotional offer in real-time is provided. The computer readable program, when executed on a computing device, causes the computing device to receive, a plurality of existing promotional offers from a promotion repository of a retailer wherein the plurality of existing promotional offers is applicable for a particular time frame. The promotional repository comprises of existing promotional offers as well as new promotional offers. The system receives existing promotional offers from the repository for a specific period. The computer readable program, when executed on a computing device, causes the computing device to scan a plurality of items in the cart at a point-of-sale (POS) counter. The POS receives a plurality of cart items as well as list of existing promotional offers. The computer readable program, when executed on a computing device, causes the computing device to pass the plurality of scanned items and the existing promotional offers to a linear programming (LP) algorithm to assign the ideal promotional offer to the plurality of the scanned items. The LP algorithm optimizes the ideal promotional offer based on a plurality of objective functions. The LP algorithm also considers existing business rules, decision variables and constraints applicable at the time of scanning of the cart items at the POS. The computer readable program, when executed on a computing device, causes the computing device to derive a centroid and standard deviation (SD) from an objective function specific promotional offer distribution (POD) wherein the POD is derived from a plurality of existing promotional offers pertaining to the objective function of the linear programming algorithm. The centroid of the existing promotional offers is derived from a distance measure between each pair of the existing promotional offers. The POD is specific to each objective function and has a dynamic distribution due to changing centroid and standard deviation during addition of the new promotional offer. The computer readable program, when executed on a computing device, causes the computing device to derive an objective function specific dynamic threshold from the centroid and SD of the objective function specific POD to obtain the objective function. The computer readable program, when executed on a computing device, causes the computing device to assign a new promotional offer by an automatic route when the new promotional offer lies within the objective function specific dynamic threshold; and a manual route when the new promotional offer lies outside an objective function specific dynamic threshold. The computer readable program, when executed on a computing device, causes the computing device to continuously update the linear programming by accommodating the new promotional offers in real time.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a functional block diagram of a system for recommendation of an ideal promotional offers, according to some embodiments of the present disclosure.
FIG. 2 illustrates components of the promotion recommendation system, according to some embodiments of the present disclosure.
FIGS. 3A and 3B are an exemplary flow diagram for a method for recommendation of the ideal promotional offers, in accordance with some embodiments of the present disclosure.
FIGS. 4A and 4B illustrate formation of an adopter to handle the objective function, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In the foregoing description, terms 'person', 'people', 'shopper', 'buyer', and 'customer' are used interchangeably, and they refer to a human involved in purchase activity by the method of the present disclosure.

In the foregoing description, terms 'retailer', 'seller', 'business', 'shopkeeper', 'organization' and 'store' are used interchangeably, and they refer to a human/ entity involved in sales activity by the method of the present disclosure.

In the foregoing description, terms `items', 'products', 'merchandize', and 'objects' are used interchangeably, and they refer to a tangible thing involved in a buying-selling relationship by the method of the present disclosure.

Offering promotions on the items or the group of items is a common practice. Often, the promotional offers are not taken up by the shoppers. One of the key problems is the timing of the offers wherein shopper may not need a specific item under promotion, maybe due to recent purchase or due to delayed item usage cycle. For a retailer, it would be an opportunity cost in terms of associated promotional cost such as advertising cost, material cost and promotional inventory cost. For a retailer, a more optimum promotion could lead to better sales returns. As for the shopper, promotional benefits cannot be realized. Besides promotional timing issues, a shopper does not buy just a single product but a basket of goods. Ideally, the basket should be best value. The lack of understanding purchase relationship in a basket of goods leads to shoppers not getting the best out of promotional offers, leading to sub-optimal value and dissatisfaction. Further, promotions are retailer centric wherein retailer focus on maximizing profit by utilizing a specific time-frame; or they are shopper centric wherein loyalty points (e.g. voucher/ purchase redemption) are passed on to the shopper as benefits. Retailers have huge number of promotional offers and complex eligibility rules leading to explored number of combinations of offers that are eligible for a set of items in a cart. Recommendation system used by retailer requires huge memory requirement to generate the permutations and combinations of offers as per eligibility criteria fixed by the retailer and also generation of eligible offers takes long running time. Ideal offers which maximize benefit to the shopper in relation to the cart items need to be identified from the eligible promotional offer combinations in real time.

The embodiments herein provide a method and a system to recommend ideal promotional offers to one or more items at a store level while considering one or more promotional strategies of the organization. Wherein the one or more promotional strategies includes increasing cart size, maximizing shopper benefit, boosting customer loyalty, and raising profit. It would be appreciated that the ideal promotional offer generation in real time herein involves adoptive objective function which is dynamic in nature and adapts with the active nature of one or more promotional offers as well as continuous addition of new offers.

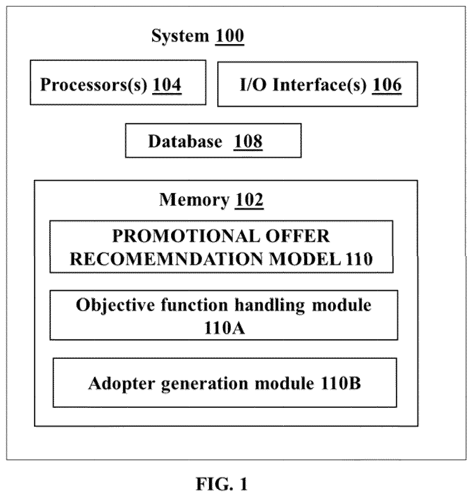

Referring now to the drawings, and more particularly to FIG. 1 through FIG. 4B, where similar reference characters denote corresponding features consistently throughout the figures, there are shown preferred embodiments, and these embodiments are described in the context of the following exemplary system and/or method.

FIG. 1 illustrates a functional block diagram of a system for recommendation of ideal promotional offers, according to some embodiments of the present disclosure.

In an embodiment, the system 100, also referred to as promotional recommendation system, includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and `hardware processors' may be used interchangeably. In an embodiment, the system 100 can be implemented in a variety of computing systems, , laptop computers, notebooks, hand-held devices, workstations, mainframe computers, servers, a network cloud and the like. The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) 106 can include one or more ports for connecting a number of devices to one another or to another server. The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 102 may include a database or repository. The memory 102 may comprise information pertaining to input(s)/output(s) of each step performed by the processor(s) 104 of the system 100 and methods of the present disclosure. In an embodiment, the database may be external (not shown) to the system 100 and coupled via the I/O interface 106. The memory 102, further includes a promotion recommendation model 110 which comprises of an objective function handling module 110A and an adopter generation module 110B. The memory 102 further includes a plurality of modules (not shown here) comprises programs or coded instructions that supplement applications or functions performed by the system 100 for executing different steps involved in the process of ideal promotional offer recommendation. The plurality of modules, amongst other things, can include routines, programs, objects, components, and data structures, which perform particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 104, or by a combination thereof. The plurality of modules can include various sub-modules (not shown). Further, the system 100 also includes a database 108. In an embodiment, the database 108 may be external (not shown) to the system 100 and coupled to the system via the I/O interface 106. Further, the memory 102 may comprise information pertaining to input(s)/output(s) of each step performed by the processor(s) 104 of the system 100 and methods of the present disclosure.

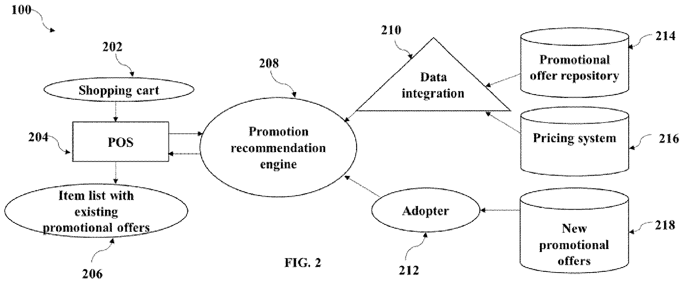

FIG. 2 illustrates components of the promotion recommendation system 100, according to some embodiments of the present disclosure.

As illustrated in FIG. 2, critical components involved in the promotion recommendation system 100 include a shopping cart 202 with a plurality of items, a point-of-sale (POS) counter 204 wherein the system 100 perform optimization of all the current offers to leverage the ideal offer to the shopper, a list of items with a plurality of promotional offers 206 in various permutation and combinations of the cart items, a promotion recommendation engine 208, a data integration tool 210, an adopter 212, a promotional offer repository 214, a pricing system 216 and a new promotional offers 218. When the shopper reaches the POS 204 with the plurality of items 202, the items 202 are put through scanning to identify the associated promotional offer applicable to the item or to the group of items. The POS 204 receives the item list with promotional offers 206 as input. Also the POS receives as input, the list of promotion offers applicable in various possible combinations applicable to the cart items. Further, the information about the items along with the applicable promotional offers as well as the group of items along with the applicable promotional offers is fed to the promotional recommendation engine 208. The promotional recommendation engine 208 executes linear programming algorithm to generate ideal promotional offers to the shopper. Benefit to the shopper is maximized by applying linear programming algorithm, by considering available promotional offers, business rules that exist in real time or the time during which the items are scanned and the objective functions. List of items scanned by the user and ideal promotional offers assigned to each item of the basket is provided as an outcome of linear programming by maximizing benefit to the shopper. Consistency in the results is achieved by prioritizing the three objective functions in the below mentioned sequence to the solver:
- Higher benefits
- The number of items (SKU quantity precisely) involved in participation of the promotional offer creation.
- Higher price items to be considered for participating in the promotions.

In an embodiment of the present invention, epsilon and multiplication factors are added to obtain the consistent results from the linear programming algorithm. Under such controlled environment, the system 100 generates the benefits and the promotions involved with the SKU quantity remain the same during multiple execution of best deal engine. At the backend, the system 100 maintains the promotional offer repository 214 which comprises of the plurality of offers generated by the retailer. The updation of offers in the promotional offer repository 214 is a continuous process. As retailers keep introducing new promotional offers at frequent interval, addition of new promotional offers into a suitable group in the promotional offer repository 214 becomes a dynamic activity and the system 100 readjusts the groups upon addition of the new promotional offer. In an embodiment, when a shopper scans the items during check out in the brick-and-mortar stores, list of items picked in the cart of the shopper is identified in real time and the list of items is mapped with other information pertaining to the point of time such as price of each item and promotional offers applicable to each item or group of items. List of items scanned by the user is mapped with promotional offer repository 214 to identify the items with promotion participation in real time. List of items scanned by the user and their potential promotional offers are passed in linear programming (LP) algorithms. The system 100 requires the pricing system 216 for optimization of ideal promotional offers. The pricing system is controlled by the business rules and is input to the promotion recommendation engine 208 along with promotional offer repository 214. The inputs from the pricing system 216 and the promotional offer repository 214 are fed to the data integration module 210. The data integration modules process a plurality of decision variables created by the retailer for all the participating skus in the promo based on the business rules followed by the retailer. In an instance, decision variables keep a count on the number of items of the skus is being used in total for each time the promo is triggered. In another instance, trigger count variable is created to count the number of times the promotion is being triggered. As the new promotional offers 218 keep adding to the system 100, an adopter 212 handles the new promotional offers 218. Initially new promotional offers are reviewed manually, and many objective functions are created as per standard linear programming requirements. In an embodiment, the syntax of new promotional offers is reviewed manually and the new promotional offers with similar syntax are used to create an objective function of linear optimization. The adopter 212 handles the promotional offers by segregating the plurality of promotional offers under one objective function of linear programming into a group of promotional offers. Within each group, distance between two promotional offers is derived using Jaccard index and is repeated for all pairs of promotional offers of the group. Distance between two promotional offers is derived by considering entire syntax of promotional offers or part of syntax of promotional offer. In one embodiment, it is derived by considering only qualifier type of the promotional offer. In another embodiment, it is derived by considering only the calculation part of the promotional offer. The output of the adopter 212 and the data integration module 210 is fed to the promotion recommendation engine 208. Based on the objective function assignment to the new promotional offers by the adopter and the data integration modules, the promotion recommendation engine 208 executes the linear programming algorithm. The promotional offers under one objective function of linear programming are formed into a group of promotional offers and centroid and standard deviation of each group are derived to enable new offer inclusion for recommendation to the shopper. For new promotion offers, initially new promotional offers are reviewed manually, and many objective functions are created as per standard linear programming requirements. The new promotional offers under one objective function of linear programming are formed into a group of promotional offers. Within each group, distance between two promotional offers is derived using Jaccard index and is repeated for all pairs of promotional offers of the group. Therefore, the promotion recommendation engine 208 manages bidirectional relationship with the POS wherein the promotion recommendation engine 208 receives the plurality of cart items and executes optimization of ideal promotional offer by processing the plurality of promotional offers applicable in a specific time frame; and also keeps providing new promotional offers to the POS by grouping the new promotional offer into the suitable objective function.

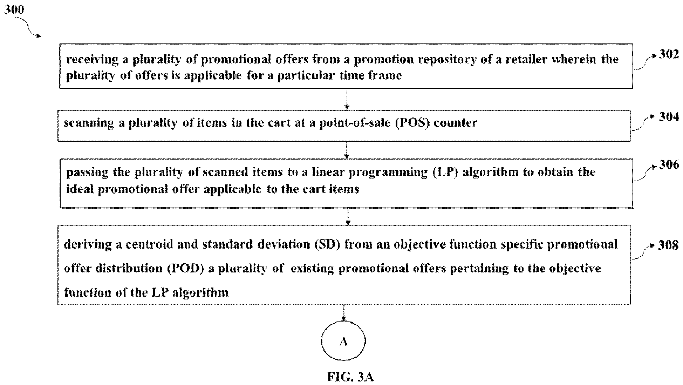

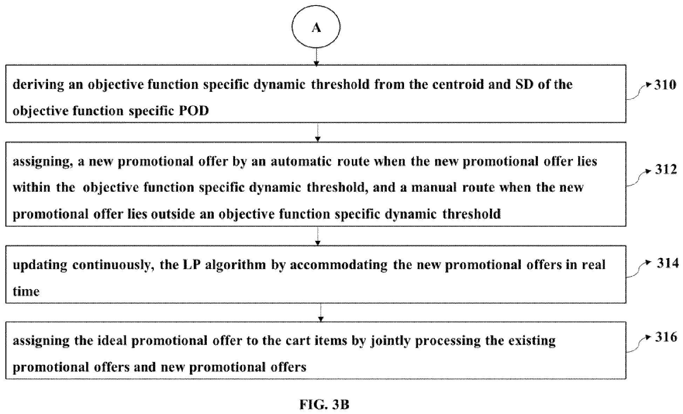

FIGS. 3A and 3B are an exemplary flow diagram for a method 300 for recommendation of ideal promotional offers, in accordance with some embodiments of the present disclosure.

The steps of the method 300 of the present disclosure will now be explained with reference to the components or blocks of the system 100 as depicted in FIG. 1 through FIG. 4B. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 302 of the method 300, the one or more hardware processors 104 are configured receive, a plurality of existing promotional offers from a promotion repository of a retailer wherein the plurality of existing promotional offers is applicable for a particular time frame. The promotional repository has the list of promotional offers and their targeted items or group of items in which each promotional offer is formed by a specific business rules as per strategy followed by the retailer. The promotional offers applicable to each item or group of items for a defined duration are decided by retailer based on the time specific promotion strategies followed by them and the promotional offers are stored in promotional repository. The nature of the promotional offers applicable for the specific time vary depending on many factors such as retailers' choice, time frame and business rules. According to an exemplary embodiment, one item may have many promotional offers at a point of time. Based on the nature of items in single and in combination with other items and also based on the quantities scanned by the user, few of suitable promotional offers are considered by system for recommendation for the user and the recommended set of offers is the best possible combination of offers which will maximize the benefit received by the user. At step 304 of the method 300, the one or more hardware processors 104 are configured to scan a plurality of items in the cart at a point-of-sale (POS) counter. At step 306 of the method 300, the one or more hardware processors 104 are configured to pass the plurality of scanned items and the existing promotional offers to a linear programming (LP) algorithm to assign the ideal promotional offer to the plurality of the scanned items; wherein the LP algorithm optimize the ideal promotional offer based on a plurality of objective functions. When a shopper scans the items during check out in the store such as brick-and-mortar stores, list of items picked by her is identified in real time and the list of items is mapped with other information pertaining to the point of time such as price of each item and promotional offers applicable to each item or group of items. The objective function is defined using the benefits from the promotional offers. Initially promotional offers are reviewed manually, and many objective functions are created as per standard linear programming requirements. In an instance, three types of benefits like "amount off', "percentage off" and "new price" and the like are defined as individual objective functions. Constraints are created using detailed information like nature of promo such as spend-based or quantity-based promo which is being used to check if the trigger condition like threshold quantity is purchased or threshold amount is spent is being satisfied every time it is being triggered. Detailed information regarding the qualifier type is used to check if the trigger threshold needs to be checked every time or checking once is enough. The number of items of each SKU in the cart is used to create constraints to upper bound on the sum of the decision variables for that specific SKU. List of items scanned by the user is mapped with promotional repository to identify the items with promotion participation in real time. List of items scanned by the user with price details and their potential promotional offers are passed in linear programming (LP) algorithms. Main framework for linear programming is constructed by creating decision variables, objective function and constraints and by considering nature of promo, qualifier type, benefit type and benefit value. Linear programming framework is formed to achieve the following criteria. Maximize (total savings to the shopper) = Maximize (sum of (item_i * benefit_i)) wherein, i varies from 1 to n, n is the basket size.

Syntax of the promotional offer: The syntax of the promotional offer indicates the format of promotion offer which varies across retailers. In an instance, `Buy every X quantity from Group A, get Z% off total' is an example for a promotion offer and here, `Buy every X quantity from Group A, ` is termed as qualifier type and ' Z% off' is the input used for deriving objective function. `Group A' denotes group of items having promotion during a particular time. Here, for explanation purpose, the time is considered as the same period which lies withing the promotion period in which the user scanned those items. Like Group A, many groups such as Group B, Group C, and Group D, etc., may be formed by the retailers as per the promotion plan for a time frame followed by the retailers. Few examples of promotional offer and corresponding input for objective function are presented in Table-1:

**Table-1**

| Example | Objective Function |
|---|---|
| Buy every X quantity from Group A, get $Zoff total | Amount OFF |
| Buy every X quantity from Group A, get Z% off total | Percentage OFF |
| Buy X or more quantity from Group A, get new price of $Zfor each | New Price |

In the present disclosure, linear optimization problem specifically turns into an integer domain space. The reason is that all integer variables are used to construct the model. So to solve the integer domain problem, open-source software is utilized to solve the linear optimization problem. In an instance, python, the free open-source software is used to solve the integer model to generate the best deal for the items in the cart. Python has many libraries to solve the linear programming problems. In an instance, PuLP, a package is used to solve linear programming problems. PuLP is a free open-source software written in Python. It is used to describe optimization problems as the mathematical models. Benefit to the shopper is maximized by applying linear programming algorithm, by considering available promotional offers, business rules that exist in real time or the time during which the items are scanned. List of items scanned by the user and ideal promotional offer assigned to each item of the basket is provided as an outcome of linear programming by maximizing benefit to the shopper. At step 308 of the method 300, the one or more hardware processors 104 are configured to derive a centroid and standard deviation (SD) from an objective function specific promotional offer distribution (POD) wherein the POD is derived from a plurality of existing promotional offers pertaining to the objective function of the linear programming algorithm. The promotional offers under one objective function of linear programming are formed into a group of promotional offers and centroid and standard deviation of each group are derived to enable new offer inclusion for recommendation to the shopper. Initially promotional offers are reviewed manually, and many objective functions are created as per standard linear programming requirements. In an instance, syntax of promotional offers is reviewed manually and promotional offers with similar syntax are used to create an objective function of linear optimization. Within each group, distance between two promotional offers is derived using Jaccard index and is repeated for all pairs of promotional offers of the group. Distance between two promotional offers is derived by considering entire syntax of promotional offers or part of syntax of promotional offer. In one instance, it is derived by considering only qualifier type of the promotional offer. In another instance, it is derived by considering only the calculation part of the promotional offer. For each group, distance between each pair is derived and it is used to derive a distribution and mean and standard deviation of the distribution. Mean of the distribution indicates central point of the promotional offers of a group which is noted commonly as centroid, and it is derived by aggregative function of the distances which were calculated among the pairs of the promotional offers of a group. The standard deviation of the group indicates variation among the promotional offers in terms of their syntax within a group. For each group, the derived mean and standard deviation are unique, and they denote nature of promotional offers within the group in terms of their syntax. Ideally the standard deviation of any group needs to be as small as possible and mean of two groups need to deviate as much as possible. If the standard deviation is lesser, it indicates that all the promotional offers in a group are more similar with respect to their syntax. In contrast, if the standard deviation is higher, it indicates that all the promotional offers in a group vary greatly with respect to their syntax. In general, the standard deviation will vary depending on the offers present in a group and also the new offers which are added to respective group over a period of time. If the mean of two groups varies greatly, it indicates the promotional offers present in a group vary greatly with another group. The derived mean and standard deviation are used to derive the threshold for a group for inclusion of a new offer to the group or the objective function in many ways. In one instance, mean plus or minus one standard deviation of a group is used as the cut of value of the group to decide inclusion of a new promotional offer to an objective function. Many such cut of value may be formed be considering different combination of mean and standard deviation of the group. At step 310 of the method 300, the one or more hardware processors 104 are configured to derive an objective function specific dynamic threshold from the centroid and SD of the objective function specific POD. At step 312 of the method 300, the one or more hardware processors 104 are configured to assigning a new promotional offer by an automatic route when the new promotional offer lies within the objective function specific dynamic threshold; and a manual route when the new promotional offer lies outside an objective function specific dynamic threshold. The new promotional offer is compared with the centroid of each group and the new promotional offer is assigned to a group with the nearest centroid for further validation in which further validation is done based on its position and level of deviation. The system 100 tries to understand the syntax of new promotional offer and takes binary decision such as need of manual intervention or not depending on dynamic threshold and position of the new promotional offer with respect to dynamic threshold. Here the dynamic threshold is formulated by the system 100 based on similarity among the criteria of existing promotional offers (referred from the promotional repository) for an objective function and nature of variation among the existing promotional offers for the objective function. When no manual intervention is required as per system suggestion, the new promotional offer is assigned to an existing objective function based on the similarity between the new promotional offer and centroid of the existing promotional offer assigned to the objective function. Each objective function will have a centroid and the centroid is formed from the promotional offers of the group. New offer is compared with centroid of each group and the new offer is shifted to a group with the nearest centroid for further validation in which further validation is done based on its position and level of deviation. During further validation, if the positions of the new promotional offer is inside the dynamic threshold of any one of the group, it is assigned with the objective function of the linear programming and if it is outside the dynamic threshold of any one of the group, it is sent for manual intervention to create a new objective function. At step 314 of the method 300, the one or more hardware processors 104 are configured to update continuously, the linear programming by accommodating the new promotional offers in real time. At step 316 of the method 300, the one or more hardware processors 104 are configured to assign the ideal promotion offer to the cart items wherein, the linear programming algorithm jointly processes the existing promotional offers and new promotional offers to assign the ideal promotional offer.

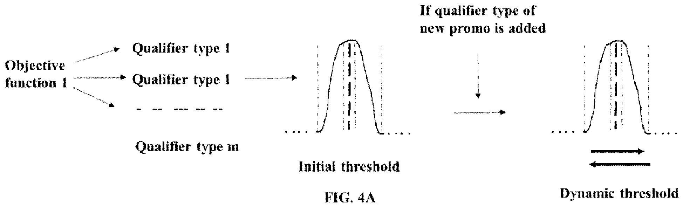

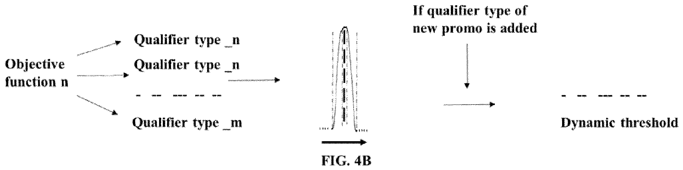

FIGS. 4A and 4B illustrate formation of an adopter to handle the objective function, according to some embodiments of the present disclosure.

As illustrated in FIGS. 4A and 4B, the system 100 manages inclusion of new promotional offers by an adopter based on the plurality of objective functions. The objective functions consider a plurality of below mentioned criteria for the inclusion of the new promotional offer:
- Similarity matrix of the promotional offers;
- Clustering of the promotional offers;
- Position of new promotional offer in comparison to the centroid; and
- Dynamic threshold

Upon receiving the new promotional offer, the system 100 analyzes the new promotional offer and understands the syntax of the promotional offer; and the system 100 adopts either manual route for intervention to handle to the new promotional offer or the automatic route for intervention to handle the new promotional offer. This preferential selection depends on the dynamic threshold and position of the new promotional offer with respect to the dynamic threshold. The dynamic threshold is formulated by system based on similarity among the criteria of existing promotional offers for an objective function and nature of variation among the existing promotional offers for the objective function. When no manual intervention is required as per system suggestion, the promotional offer is assigned to an existing objective function based on the similarity between the new promotional offer and the centroid of the existing promotional offer assigned to the respective objective function. Here centroid of existing promotional offer is derived from distance measure between each pair of existing promotional offers. Similarity between two existing promotional offers particularly their qualifier part is compared for similarity based on Jaccard index. It is repeated for each pair and similarity matrix is created. Similarity matrix is converted into dissimilarity matrix through suitable techniques. Dynamic threshold is formed based on the addition of promotional offer added in the group and nature of promotional offer added in terms of their influence in altering standard deviation of the group. When a new promotional offer is introduced, it is compared with group specific distribution to identify its position in relation to the existing behavior and to measure the level of deviation and severity of the deviation. The magnitude of deviation of the promotional offer in comparison to the centroid is used as the level of rejection. In an instance, mean plus or minus within variation of the group specific distribution(WVS) act as initial threshold to include the new promotional offer. If any new promotional offer is within the threshold of any one of the groups it is included in the group and if it is outside the threshold of any one of the group, it is sent for manual intervention. If the level of deviation is more it indicates higher possibility of rejection and vice versa. Also, more importantly the severity of the deviation is identified by considering within variation of the group specific distribution (WV). In an instance, if WV (i.e. within variation of the group) is more as shown in FIG. 4A, then slight deviation may not be a marked as a deviation. In contrast, if WV is very less as shown in FIG. 4B, then slight deviation is considered to be a marked deviation.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of leveraging, in-real time, the ideal promotional offer to the shopper having a plurality of items falling in various categories of the existing promotional offers. The assignment of ideal promotional offer involves automating the objective function used in the promotion recommendation engine based on the set of promotional offers owned by a retailer. Promotional offers in the repository are tested for similarity of syntax to derive the objective function. Two promotional offers are compared for similarity using Jaccard index and this is repeated for each pair and similarity matrix is created. Each component and its corresponding promotional offers are identified. All the promotional offers under one component are filtered and their calculation part are used for deriving an objective function. Further, the present disclosure effectively handles new promotional offers that are continuously introduced by the retailer. Whenever new promotions are added based on the derived objective function, the linear programming algorithm act by automating the objective function used in the promotion recommendation engine based on the set of promotional offers owned by a retailer. Therefore, the adoptive objective function along with the linear programming generates the plurality of promotional offers which results in customer satisfaction by offering the ideal deal as well as retailers benefit by maximizing the sales volume.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) for assigning promotional offer in real-time, the method comprising:
receiving (302), via one or more hardware processors, a plurality of existing promotional offers from a promotion repository of a retailer wherein the plurality of existing promotional offers is applicable for a particular time frame;
scanning (304), via the one or more hardware processors, a plurality of items in the cart at a point-of-sale (POS) counter;
passing (306), via the one or more hardware processors, the plurality of scanned items and the plurality of existing promotional offers to a linear programming (LP) algorithm to assign a plurality of ideal promotional offers to the plurality of the scanned items, wherein the LP algorithm optimizes the plurality of ideal promotional offers based on a plurality of objective functions;
deriving (308), via the one or more hardware processors, a centroid and standard deviation (SD) from an objective function specific promotional offer distribution (POD) wherein the POD is derived from a plurality of existing promotional offers pertaining to the objective function of the linear programming algorithm;
deriving (310), via the one or more hardware processors, an objective function specific dynamic threshold from the centroid and SD of the objective function specific POD; and
assigning (312), via the one or more hardware processors, a new promotional offer by:
an automatic route when the new promotional offer lies within the objective function specific dynamic threshold, and
a manual route when the new promotional offer lies outside an objective function specific dynamic threshold;
updating continuously (314), via the one or more hardware, the linear programming by accommodating the new promotional offers in real time; and
assigning (316), via the one or more hardware, an ideal promotion offer to the cart items wherein, the linear programming algorithm jointly processes the existing promotional offers and new promotional offers to assign the ideal promotional offer.

2. The method as claimed in claim 1, wherein the dynamic threshold is calculated based on similarity among the criteria of existing promotional offers for the objective function and nature of variation among the existing promotional offers for the objective function.

3. The method as claimed in claim 1, wherein the centroid of the existing promotional offers is derived from a distance measure between each pair of the existing promotional offers.

4. The method as claimed in claim 1, wherein POD is specific to each objective function and has a dynamic distribution due to changing centroid and standard deviation during addition of the new promotional offer.

5. The method as claimed in claim 1, wherein the standard deviation is derived each time the new promotion is added to the objective function, and the newly derived standard deviation is used to form a new threshold which is a continuous process.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive, a plurality of existing promotional offers from a promotion repository of a retailer wherein the plurality of existing promotional offers is applicable for a particular time frame;
scan, a plurality of items in the cart at a point-of-sale (POS) counter;
pass, the plurality of scanned items and the plurality of existing promotional offers to a linear programming (LP) algorithm to assign a plurality of ideal promotional offers to the plurality of the scanned items, wherein the LP algorithm optimizes the plurality of ideal promotional offers based on a plurality of objective functions;
derive, a centroid and standard deviation (SD) from an objective function specific promotional offer distribution (POD) wherein the POD is derived from a plurality of existing promotional offers pertaining to the objective function of the linear programming algorithm;
derive, an objective function specific dynamic threshold from the centroid and SD of the objective function specific POD; and
assign, a new promotional offer by:
an automatic route when the new promotional offer lies within the objective function specific dynamic threshold, and
a manual route when the new promotional offer lies outside an objective function specific dynamic threshold;
update continuously, the linear programming by accommodating the new promotional offers in real time;
assign, the ideal promotion offer to the cart items wherein, the linear programming algorithm jointly processes the existing promotional offers and new promotional offers to assign the ideal promotional offer.

7. The system as claimed in claim 6, wherein the dynamic threshold is calculated based on similarity among the criteria of existing promotional offers for the objective function and nature of variation among the existing promotional offers for the objective function.

8. The system as claimed in claim 6, wherein the centroid of the existing promotional offers is derived from a distance measure between each pair of the existing promotional offers.

9. The system as claimed in claim 6, wherein POD is specific to each objective function and has a dynamic distribution due to changing centroid and standard deviation during addition of the new promotional offer.

10. The system as claimed in claim 6, wherein the standard deviation is derived each time the new promotion is added to the objective function, and the newly derived standard deviation is used to form a new threshold which is a continuous process.

11. One or more non-transitory machine-readable information storage mediums comprising one or more instructions which when executed by one or more hardware processors cause:
receiving a plurality of existing promotional offers from a promotion repository of a retailer wherein the plurality of existing promotional offers is applicable for a particular time frame;
scanning a plurality of items in the cart at a point-of-sale (POS) counter;
passing the plurality of scanned items and the plurality of existing promotional offers to a linear programming (LP) algorithm to assign a plurality of ideal promotional offers to the plurality of the scanned items, wherein the LP algorithm optimizes the plurality of ideal promotional offers based on a plurality of objective functions;
deriving a centroid and standard deviation (SD) from an objective function specific promotional offer distribution (POD) wherein the POD is derived from a plurality of existing promotional offers pertaining to the objective function of the linear programming algorithm;
deriving an objective function specific dynamic threshold from the centroid and SD of the objective function specific POD;
assigning a new promotional offer by:
an automatic route when the new promotional offer lies within the objective function specific dynamic threshold, and
a manual route when the new promotional offer lies outside an objective function specific dynamic threshold;
updating continuously the linear programming by accommodating the new promotional offers in real time; and
assigning the ideal promotion offer to the cart items wherein, the linear programming algorithm jointly processes the existing promotional offers and new promotional offers to assign the ideal promotional offer.

12. The one or more non-transitory machine-readable information storage mediums as claimed in claim 11, wherein the dynamic threshold is calculated based on similarity among the criteria of existing promotional offers for the objective function and nature of variation among the existing promotional offers for the objective function.

13. The one or more non-transitory machine-readable information storage mediums as claimed in claim 11, wherein the centroid of the existing promotional offers is derived from a distance measure between each pair of the existing promotional offers.

14. The one or more non-transitory machine-readable information storage mediums as claimed in claim 11, wherein POD is specific to each objective function and has a dynamic distribution due to changing centroid and standard deviation during addition of the new promotional offer.

15. The one or more non-transitory machine-readable information storage mediums as claimed in claim 11, wherein the standard deviation is derived each time the new promotion is added to the objective function, and the newly derived standard deviation is used to form a new threshold which is a continuous process.
